# EUROPEAN PATENT APPLICATION

(11) **EP 2 267 617 A1**
(43) Date of publication of application: **29.12.2010**
(21) Application number: 10166716.0
(22) Date of filing: 21.06.2010
(51) Int. Cl.: G06F 17/30

(54) **Method and system for realizing alternative enclosures for atom and RSS feeds**

(30) Priority: 20.06.2009 US 218944 P
(71) Applicant: Research In Motion Limited, Waterloo, ON N2L 3W8 (CA)
(72) Inventor: Shenfield, Michael, Mississauga Ontario L4W 5M4 (CA); Martin-Cocher, Gaelle Christine, Mississuaga Ontario L4W 5M4 (CA)
(74) Representative: Moore, Barry

(57) **Abstract**

A method and system to provide enclosures, the method including formatting a content feed to include one or more enclosures referencing alternative formats of a content item, wherein at least one of said enclosures includes codec information added to a type field; and providing the content feed to a device via a network. Further, a method and device that receives a content feed, the method including receiving a content feed with multiple enclosures, the multiple enclosures including at least a primary enclosure and an alternative enclosure, wherein the primary enclosure references a primary format for a content item and the alternative enclosure references an alternate format for the content item; upon determining that a player does not support the primary format, checking whether the player supports the alternative format; and if the player supports the alternative format, downloading the content item using a reference included in the alternative enclosure.

## Description

### FIELD OF THE DISCLOSURE

The present disclosure relates to syndicated feed reception and in particular to alternative enclosure handling for syndicated feed reception.

### BACKGROUND

Content syndication allows software programs to check for updates published on a web site. A content feed for syndication is a list of content in a standardized format. The content feed is published and can then be downloaded by web sites that syndicate content from the feed. Similarly, the content feed can be downloaded by a feed reader program that allows a user to subscribe to the feed.

Two common syndication formats used for content feeds include Really Simple Syndication (RSS) and ATOM. The RSS 2.0 format is specified by the RSS Advisor Board at RSSboard.org and the ATOM Syndication Format is specified by the Internet Engineering Task Force (IETF) request for comments (RFC) 4287, the contents of which are incorporated herein by reference. ATOM and RSS feeds comply with an ATOM or RSS extensible markup language (XML) schema that provides a limited number of parameters. Such parameters describe the feed and how an RSS and ATOM reader can make use of it. Examples of such of parameters include: title, source, description, link, contributor, category, among others.

ATOM and RSS schemas contain parameters that are used to provide a reference to additional content, such additional content being related to the syndicated feed fragment in which the reference is found. This additional content can be a media such as an audio or video, package in a file (e.g 3GP file format) or in a stream (RTSP); or can be an HTML page. As used herein, the reference to additional content is called an enclosure.

Enclosure handling may need to be extended in ATOM and RSS in various situations. One situation is for the provision of alternative enclosures, which may be used to provide a reference to the same content in an alternative format or to provide a reference to an alternative content. Such additional enclosure (also called alternative enclosure) can provide more information about the format of the referenced content and allows the determination before retrieval of the support of the content in a different format that a player on a device can handle if the player cannot handle the primary enclosure format.

### SUMMARY

The present disclosure provides a method at a content provider server to provide enclosures, the method comprising: formatting a content feed to include one or more enclosures referencing alternative formats of a content item, wherein at least one of said enclosures includes codec information added to a type field; and providing the content feed to a device via a network.

The present disclosure further provides a method in a device that receives a content feed, the method comprising: receiving a content feed with multiple enclosures, the multiple enclosures including at least a primary enclosure and an alternative enclosure, wherein the primary enclosure references a primary format for a content item and the alternative enclosure references an alternate format for the content item; upon determining that a player does not support the primary format, checking whether the player supports the alternative format; and if the player supports the alternative format, downloading the content item using a reference included in the alternative enclosure.

### BRIEF DESCRIPTION OF THE DRAWINGS

The present disclosure will be better understood with reference to the drawings, in which:
**Figure 1** is an example system diagram showing a device communicating with a content provider through a network;
**Figure 2** is an example flow diagram of a process for choosing enclosures at a device;
**Figure 3** is an example flow diagram of a process for providing alternative enclosures from a network side;
**Figure 4** is an example flow diagram of a process for choosing enclosures at a device using alternative indications;
**Figure 5** is a flow diagram of a process for providing enclosures from a network side where the enclosures use a modified ATOM registry; and
**Figure 6** is a schematic diagram showing an exemplary mobile device.

### DETAILED DESCRIPTION

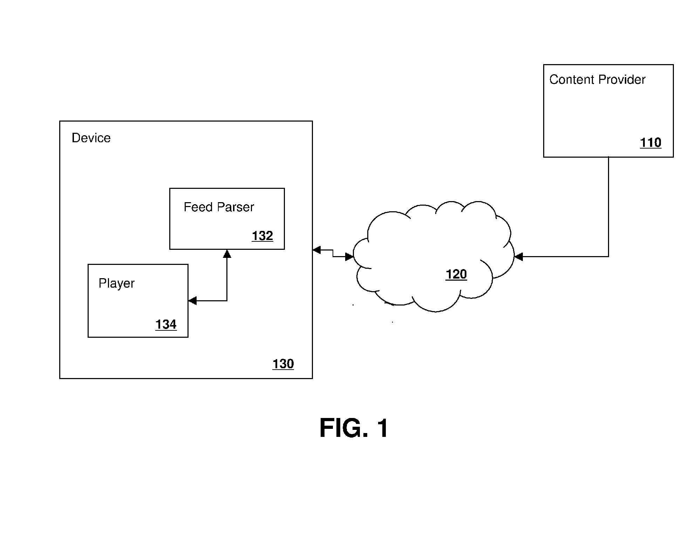

Reference is now made to **Figure 1. Figure 1** shows a simplified diagram in which a content provider **110** communicates through a network **120** with a device **130.**

In particular, a content provider **110** could be any provider that syndicates content. Further, in some embodiments, content provider **110** could communicate with network **120** using a proxy or aggregator (not shown).

Network **120** could be any communications network, and in one embodiment is the Internet. Further, if device **130** is a mobile device, network **120** could include wireless network elements to facilitate communication with device **130.**

Device **130** could be any communications device, and could include a computer, laptop or a mobile device such as a cellular telephone, personal digital assistant, data and/or voice device, smart phone, pager, among others.

Device **130** has a Feed Parser **132,** which in some embodiments may be an RSS or ATOM reader. Device **130** further includes a player **134,** which may include a video player, audio player, among others.

In one embodiment, feed parser **132** could be part of player **134,** or vice versa.

Device **130** will typically include a processor (not shown) to run a player application and to perform various device functionality. Also, device **130** typically includes a communications subsystem to communicate with network **120.** Such a subsystem may be a fixed subsystem, such as an Ethernet connection, or may be a wireless subsystem, such as a radio transceiver to communicate with a base station.

Enclosures are provided in ATOM and RSS with 3 attributes: a uniform resource locator (URL) or link, a TYPE that is used to describe the MIME type of the content to be retrieved on the link, and a LENGH attribute that is used to declare the size of the content to be retrieved.

Specifically, in RSS 2.0, an enclosure has three required attributes. These are the URL indicating where the content referenced by enclosure is located, the length attribute which indicates how large the content is, in bytes, and the type attribute which indicates what the multipurpose Internet mail extensions (MIME) type of the content is.

An example of an enclosure with a standard MIME type is:

```
     <enclosure url="http://www.scripting.com/mp3s/weatherReportSuite.mp3"
     length="12216320" type="audio/mpeg" />
```

As seen above, the url provides a link to a file that has a .mp3 extension. The length indicates that the file is approximately 12 megabytes, and the type indicates a MIME type of audio/mpeg.

A further example, utilizing a Third Generation Partnership Project (3GPP) MIME type is:

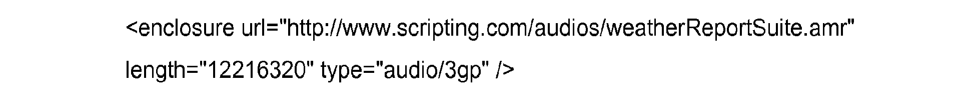

The example above has a url with a link to a file that has an .amr extension, the length is approximately 12 megabytes, and the type indicates a MIME type of audio/3gp.

Similarly, in ATOM, an enclosure is achieved by setting the link "rel" to "enclosure". An enclosure in ATOM has three attributes, which are type, specifying the MIME type, length, specifying the size of the content referenced by enclosure in bytes, and href, specifying the location of the content.

An example of an enclosure having a standard MIME type in ATOM is:

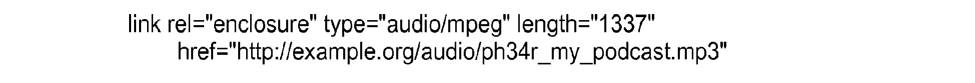

As seen above, the MIME type is specified as "audio/mpeg, the length is 1337 bytes and the href indicates the location of a file with a .mp3 extension.

A further example of an enclosure having a 3GPP MIME type is:

```
     link rel="enclosure" type=" audio/3gp " length="1337"
        href="http://example.org/audio/ph34r_my_podcast.amr"
```

In the example above, the MIME type is specified as "audio/3gp", the length is 1337 bytes and the href indicates the location of a file with a .amr extension.

In some instances it is desirable to extend the enclosure schemas. In particular, on some devices certain codecs related the MIME types may not be supported. In this regard, if a particular codec for the MIME type is not supported, the enclosure that requires such codec should not be downloaded in some embodiments. For example, if the media player is on a mobile device, the costs associated with downloading a large enclosure may be high, and if the enclosure subsequently cannot be utilized, this creates a negative user experience. Furthermore, the unnecessary downloading of the enclosure wastes network resources and battery life of the mobile device.

### Providing Codec Information

Codec information can be provided as part of an enclosure in ATOM or RSS feeds. As will be appreciated by those skilled in the art, the MIME type may be insufficient information to determine whether a player supports format of an enclosure. For example, the MIME Type "audio/3gpp" can contain AMR, AAC, AMR-WB, Extended AMR-WB, or Enhanced aacPlus contents. A player may, for example, support AMR but not AAC codec parameters.

Using IETF RFC 4281 codec parameters, the "type" field may be extended.

Thus, in ATOM, the Type could be used to reference 3GPP codecs as:

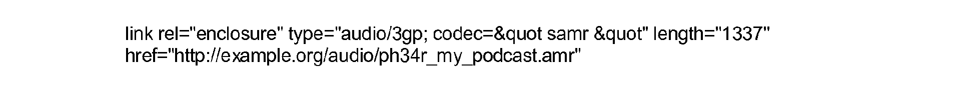

As indicated above, the Type value is "audio/3gp" for the MIME type, but also includes information that the codec required is AMR audio.

Similarly, RSS Type attribute can be extended as:

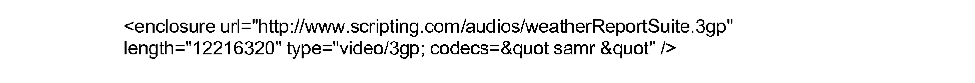

The above shows the MIME type as video/3gp and the codec as AMR. Mulitple codecs could also be specified, such as:

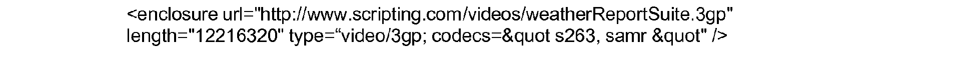

The above shows the MIME type as video/3gp and the codecs as H.263 Video and AMR audio.

The addition of codec information in conjunction with MIME type assists a device to determine whether it can consume the enclosure content. It should be noted that codec information could also include a codec profile and/or level.

### Alternative Enclosures

In one embodiment, an alternative enclosure could be specified which provides a different content format than the primary enclosure. A device could then determine whether a player on the device supports the primary MIME type or CODEC for the content, and if not the device could then determine whether the MIME type or CODEC of an alternative enclosure is supported.

One solution to support alternative enclosures is to use a namespace extension to define further parameters for enclosures. A variety of content providers have extended ATOM/RSS readers to associate more parameters to the enclosure elements and to provide a second reference to an alternative content format. Such content providers have created a multitude of additional namespaces for such purposes, and only extended ATOM/RSS readers supporting such namespaces can make use of these additional parameters.

An example of an extended RSS format in the Yahoo^{™} namespace providing more parameters for enclosure is:

### Example:

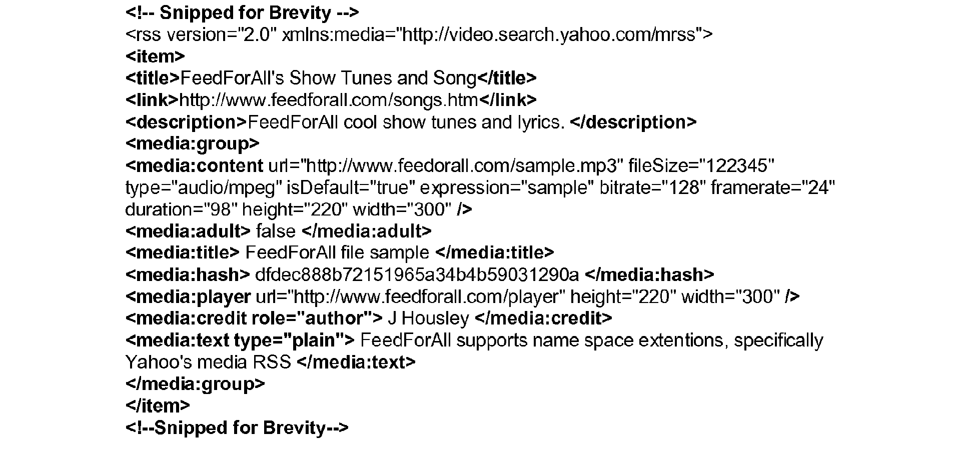

The above shows the enclosure is provided as media:content , where prefix "media" specifies an external namespace associate with the XML schema where content element is defined. As will be appreciated by those in the art, only extended ATOM and RSS readers supporting the YAHOO namespace will be able to parse the media group enclosure.

An example of extended RSS format in the 3GPP namespace providing an alternative enclosure and more parameters for enclosure was provided in the 3GPP WD4_CODEC standards working group as submission S4-090424, and is:

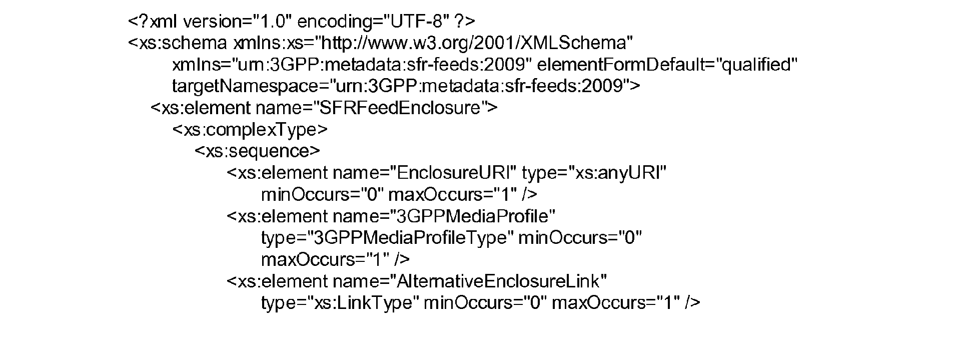

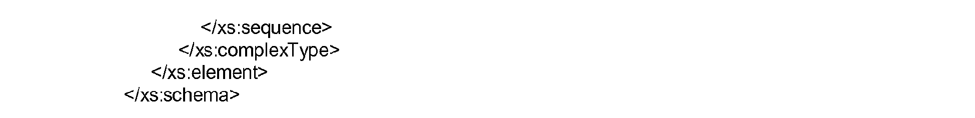

As indicated above, a 3GGP namespace is defined and the enclosures are provided as "EnclosureURI" and "AlternativeEnclosureLink". As will be appreciated, only extended ATOM and RSS readers supporting the 3GPP namespace will be able to parse the 3GPP feed Enclosure element.

Furthermore, in one embodiment the extended schema may contain redundant information as the initial ATOM or RSS enclosure may be repeated in the EnclosureURI element or might replace the enclosure from the ATOM or RSS element. Such redundant signaling is generally not efficient. In the case the Enclosure is removed from the ATOM/RSS element and provided in the 3GPP extensions, the legacy ATOM/RSS readers will not get the removed enclosure.

Such namespace extensions create complexity and require readers that support such extensions. Instead, existing ATOM/RSS XML schemas could be employed in order to ensure that legacy ATOM/RSS readers can make use of them. Further, in one embodiment it would be useful describe how existing parameters in ATOM/RSS XML schemas can be used to provide additional information, thus eliminating the need for additional namespaces and schemas.

Solutions should, in one embodiment, also minimize the amount of information to be added to the schema to maintain efficiency in the delivery and parsing of ATOM and RSS feeds.

### Ordered Enclosures

In a first embodiment, one option to provide alternative enclosures is to duplicate the enclosure without indicating which one is primary and which one is alternative. In this regard the player decides which link to utilize based on its capabilities and preferences. In one embodiment, the preferences may be determined by a content provider by ordering enclosures in the feed in a manner the content provider prefers.

For example, in an ATOM feed, the following might be provided:

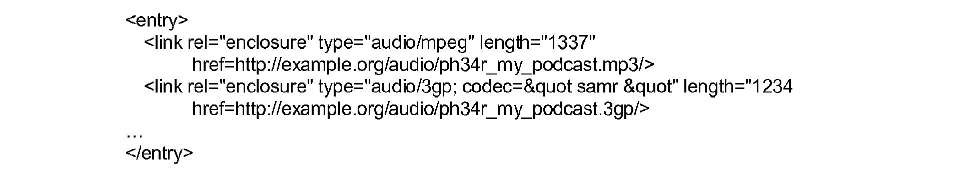

As will be appreciated by those in the art, in the ATOM format there is no limitation to the number of links that could be provided within an entry. As a consequence, in the example above multiple mp3s could be provided, followed by multiple alternate amr audios. The ordering could be a repeated sequence of one mp3 followed by one amr, or the ordering could be all mp3s first and all amrs after.

Further, the alternative enclosures could be in separate <entry> elements if the same identifier is used for the entry. In this case the <id> element for such <entry> elements should have the same value to indicate that both enclosures represent the same content. For example:

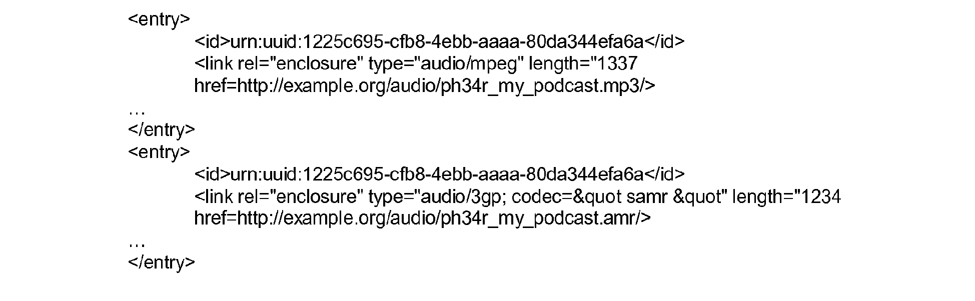

In RSS the same feed may be:

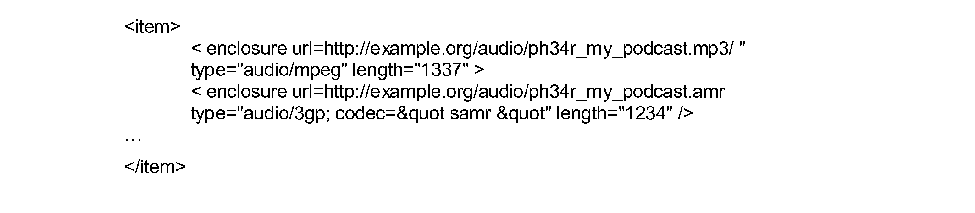

In RSS the feed may also be divided into different <item> elements. In this case the <guid> element for such <item> elements should have the same value to indicate that both enclosures represent the same content. For example:

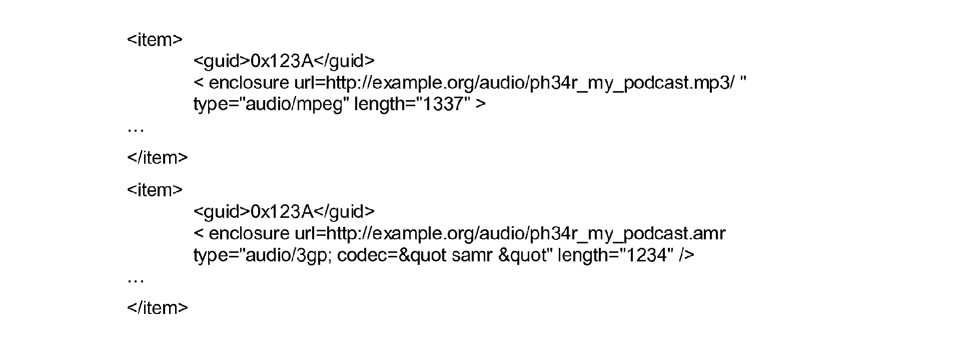

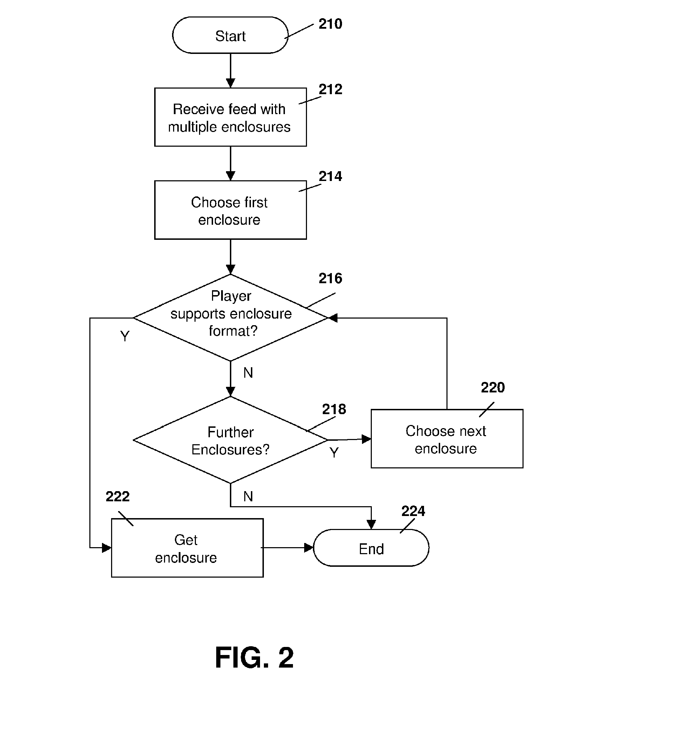

Reference is now made to **Figure 2. Figure 2** shows a flow chart of example device side processing when alternative enclosures are provided as indicated above.

The process of **Figure 2** starts at block **210** and proceeds to block **212** in which a player receives multiple enclosures. The process then proceeds to block **214** in which the player chooses a first enclosure. The first enclosure may, in one embodiment, be chosen based on the order in which the enclosure is provided.

The process then proceeds to block **216** in which a check is made to determine whether the player supports the enclosure format. The check in block **216** could be based on the type information provided, including MIME type and/or CODEC information.

If the check in block **216** determines that the player does not support the enclosure format, the process proceeds to block **218** to determine whether any further (alternative) enclosures in the feed are supported. If yes, the process proceeds to block **220** and the next alternative enclosure is chosen. The process then proceeds back to block **216.** In some cases, at block **216,** if the first enclosure does not contain enough information to determine if the referenced content can be supported, the player may process the second/alternate enclosure.

If, in block **218** it is determined there are no further alternative enclosures then the process proceeds to block **224** and ends.

If, in block **216,** it is determined that the format of the enclosure is supported, the process proceeds to block **222** and the enclosure may be downloaded or otherwise obtained. The process then proceeds to block **224** and ends.

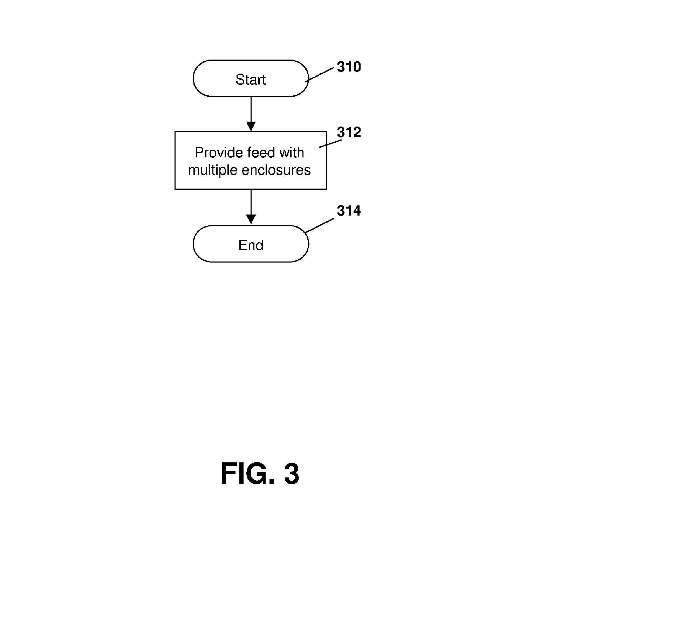

On the network side, the content provider or other network element may provide alternatives in the RSS or ATOM feed. Reference is now made to **Figure 3****.**

In **Figure 3****,** the process starts at block **310** and proceeds to block **312** in which a feed with multiple enclosures referencing various formats of the same content is provided. In particular, in accordance with the embodiment above, the process at block **312** may order the enclosures based on the preference of the content provider.

The process then proceeds to block **314** and ends.

As will be appreciated by those skilled in the art, the parser **132** from **Figure 1** does not need to be changed in order to support the embodiment above, and thus the embodiment above is backwards compatible with regards to existing parsers/readers.

### Explicit Ordered Enclosures

In a further embodiment, the ordered enclosures can be explicitly labeled. In particular, XML schema is flexible enough to place indications between the start and end of elements.

For example, in ATOM the explicit placement of an indication (e.g. primary or alternative) may include:

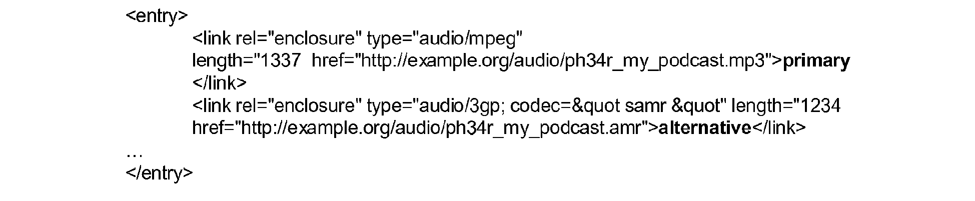

If multiple entries are used, the example may include:

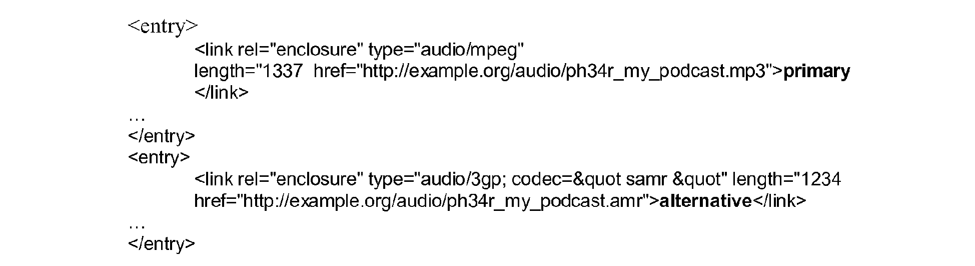

As seen from the above, the indication "primary" or "alternative" is inserted before the end of the <link> element. The indications "primary" and "alternative" are meant only as examples and other indications could be used. Further, if more one alternative is provided, further indications could be defined for a second alternative, third alternative, etc.

For RSS, similar explicit indications could be added. For example:

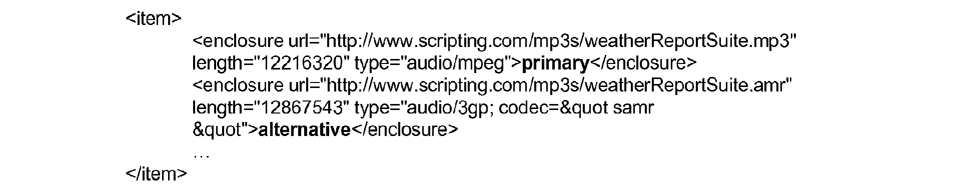

Also, using different <item> elements may include :

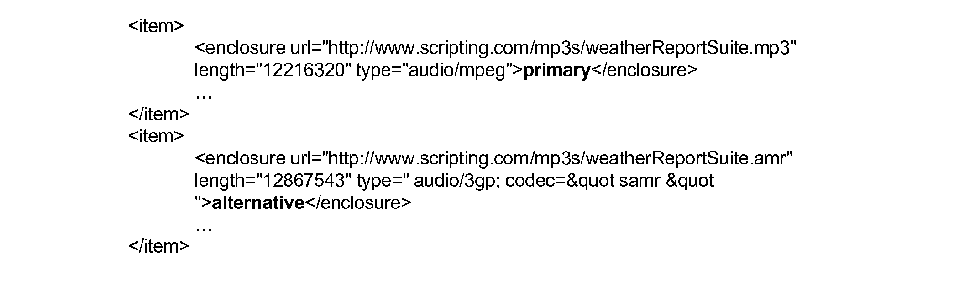

Thus for RSS the <enclosure> element is used similarly to the <link> element for the ATOM schema above.

The above may be implemented on a device side in accordance with **Figure 2** and on the network side in accordance with **Figure 3****.** In particular, block 214 chooses the first enclosure based on the presence of the first explicit indication, such as "primary". Block **220** chooses subsequent enclosures based on explicit indications such as "alternative" or "secondary", among others.

On the network side, the explicit indications are added as part of block **312.**

### RSS Category Attribute Use

In a further embodiment, rather than using the explicit indicator with an <enclosure> element, the <category> element within <item> element may be used to categorize the enclosure as primary or alternative.

Generally, the <category> element specifies categorization taxonomy for the content item contained in or referenced by the <item> element. The <category> element can also specify the hierarchic location in a category. In one embodiment, the category can be expanded to indicate whether an enclosure element is a primary or alternative.

In particular, one example of the use of the <category> attribute is:

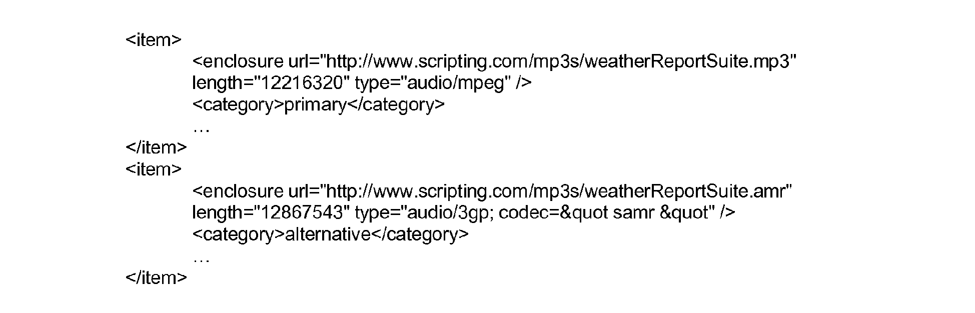

From the above, the category element following the enclosure element specifies whether the enclosure is a primary or alternative enclosure. The use of the terms 'primary' and 'alternative' is not meant to be limiting, and other values or number of values could be used.

The above may be implemented on a device side in accordance with **Figure 2** and on the network side in accordance with **Figure 3****.** In particular, block **214** chooses the first enclosure based on the category specified under the enclosure, where block **214** looks for the category value to be "primary" in one example. Block **220** chooses subsequent enclosures based category values provided after the enclosure elements, such as "alternative" or "secondary", among others.

On the network side, the category values are added as part of block **312.**

### ATOM Registry Modification

In a further embodiment, the ATOM registry maintained by the Internet Assigned Numbers Authority (IANA) as part of RFC 4287 could be modified to include a new value for "rel". The value may, for example, be rel="alternative enclosure".

The registry originally contained five values for rel, namely "alternate", "related", "self", "enclosure", and "via".

The change would be employed in instances when the Feed Parser **132,** namely an ATOM viewer, is configured to understand the change and that would be widely supported across network and devices (e.g. laptop, 3GPP devices, 3GPP2 devices).

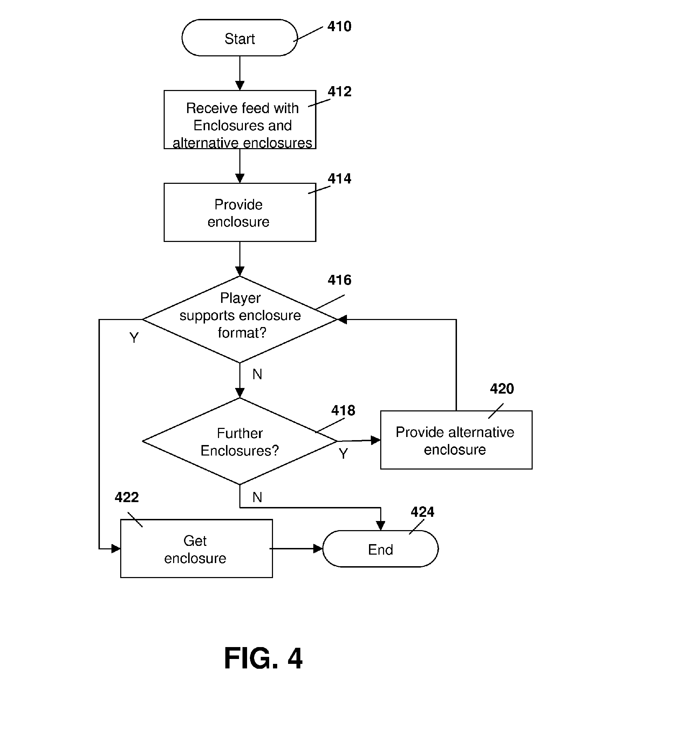

Reference is now made to **Figure 4****.** On the device side the Feed Parser **132** would provide a player **134** with a first enclosure if the player can support it, and otherwise with the alternative enclosure. Alternatively the Feed parser **132** provides the player **134** with all enclosures and the player **134** determines which one(s) to use.

The process of **Figure 4** starts at block **410** and proceeds to block **412** in which a feed is received with a primary enclosure and alternative enclosures. The process of **Figure 4** is not, however, meant to be limited to two enclosures and any number of alternatives could be used.

From block **412** the process proceeds to block **414** in which the enclosure reference is provided to the player **134.** In one embodiment, if parser **132** and player **134** are the same component block **414** may not be needed.

From block **414** the process proceeds to block **416** in which either the parser **132** or player **134** checks to see whether the player **132** supports the enclosure format. The check of block **416** could be based on MIME type and/or CODEC information and/ or information contained in the link received with the enclosure.

From block **416,** if the player does not support the enclosure format, the process proceeds to block **418** in which a check is made whether other enclosures are available. This is based on the new "alternative enclosure" indication.

From block **418,** if other enclosures are available, the process proceeds to block **420** to obtain the alternative enclosure and then back to block **416.**

Conversely, if other enclosures are not available the process proceeds from block **418** to block **424** and ends.

From block **416,** if the player **134** supports the enclosure format, the process proceeds to block **422** in which the enclosure may be downloaded, and the process then proceeds to block **424** and ends.

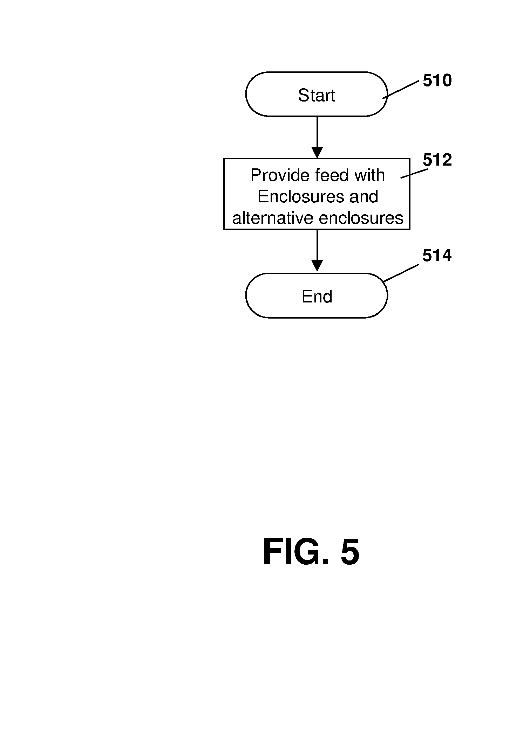

On the network side, reference is made to **Figure 5****.** In **Figure 5** the process starts at block **510** and proceeds to block 512 in which the feed is provided with enclosures and alternative enclosures. The alternative enclosures utilize the "alternative enclosure" indication defined in the registry.

The process proceeds from block **512** to block **514** and ends.

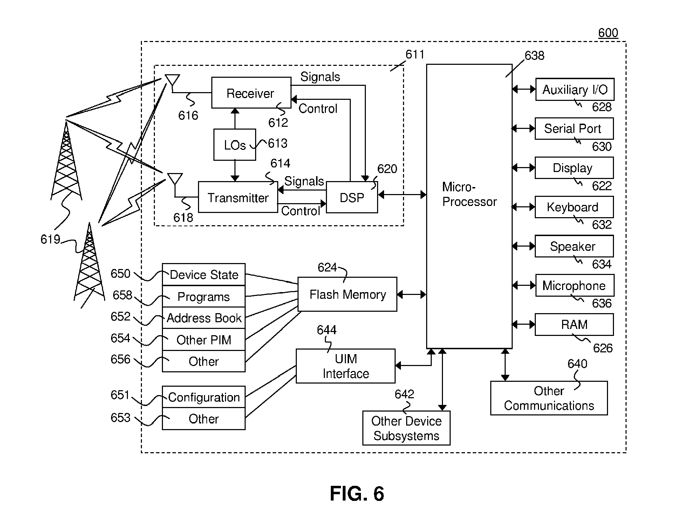

**Device 130** can be any device, as indicated above. If device **130** is a mobile device, one exemplary mobile device is shown with regard to **Figure 6** below.

In **Figure 6****,** mobile device **600** is generally a two-way wireless communication device typically having voice and data communication capabilities. Mobile device **600** may have the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **600** is enabled for two-way communication, it has a communication subsystem **611,** including both a receiver **612** and a transmitter **614,** as well as associated components such as one or more, embedded or internal, antenna elements **616** and **618,** local oscillators (LOs) **613,** and a processing module such as a digital signal processor (DSP) **620.** As will be apparent to those skilled in the field of communications, the particular design of the communication subsystem **611** will be dependent upon the communication network in which the device is intended to operate. For example, mobile device **600** may include a communication subsystem **611** designed to operate within the GPRS network or UMTS network.

Network access requirements will also vary depending upon the type of network **619.** For example, In LTE, UMTS and GPRS networks, network access is associated with a subscriber or user of mobile device **600.** For example, a GPRS mobile device therefore requires a subscriber identity module (SIM) card in order to operate on a GPRS network. In UMTS a USIM or SIM module is required. In CDMA a RUIM card or module is required. These will be referred to as a UIM interface herein. Without a valid UIM interface, a mobile device may not be fully functional. Local or non-network communication functions, as well as legally required functions (if any) such as emergency calling, may be available, but mobile device **600** will be unable to carry out any other functions involving communications over the network **619.** The UIM interface **644** is similar to a card-slot into which a card can be inserted and ejected like a diskette or PCMCIA card. The UIM card can hold many key configurations **651,** and other information **653** such as identification, and subscriber related information.

When network registration or activation procedures have been completed, mobile device **600** may send and receive communication signals over the network **619.** Signals received by antenna **616** through communication network **619** are input to receiver **612,** which may perform such common receiver functions as signal amplification, frequency down conversion, filtering, channel selection and the like, and in the example system shown in **Figure 6****,** analog to digital (A/D) conversion. A/D conversion of a received signal allows more complex communication functions such as demodulation and decoding to be performed in the DSP **620.** In a similar manner, signals to be transmitted are processed, including modulation and encoding for example, by DSP **620** and input to transmitter **614** for digital to analog conversion, frequency up conversion, filtering, amplification and transmission over the communication network **619** via antenna **618.** DSP **620** not only processes communication signals, but also provides for receiver and transmitter control. For example, the gains applied to communication signals in receiver **612** and transmitter **614** may be adaptively controlled through automatic gain control algorithms implemented in DSP **620.**

Mobile device **600** generally includes a microprocessor **638,** which controls the overall operation of the device. Communication functions, including data communications, are performed through communication subsystem **611.** Microprocessor **638** also interacts with further device subsystems such as the display **622,** flash memory **624,** random access memory (RAM) **626,** auxiliary input/output (I/O) subsystems **628,** serial port **630,** keyboard **632,** speaker **634,** microphone **636,** a short-range communications subsystem **640** and any other device subsystems generally designated as **642.**

Some of the subsystems shown in **Figure 6** perform communication-related functions, whereas other subsystems may provide "resident" or on-device functions. Notably, some subsystems, such as keyboard **632** and display **622,** for example, may be used for both communication-related functions, such as entering a text message for transmission over a communication network, and device-resident functions such as a calculator or task list.

Operating system software used by the microprocessor **638** may be stored in a persistent store such as flash memory **624,** which may instead be a read-only memory (ROM) or similar storage element (not shown). Those skilled in the art will appreciate that the operating system, specific device applications, or parts thereof, may be temporarily loaded into a volatile memory such as RAM 626. Received communication signals may also be stored in RAM **626.**

As shown, flash memory **624** can be segregated into different areas for both computer programs **658** and program data storage **650, 652, 654** and **656.** These different storage types indicate that each program can allocate a portion of flash memory **624** for their own data storage requirements. Microprocessor **638,** in addition to its operating system functions, may enable execution of software applications on the mobile device. A predetermined set of applications that control basic operations, including data and voice communication applications for example, will normally be installed on mobile device **600** during manufacturing. One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **619.** In one, the PIM data items are seamlessly integrated, synchronized and updated, via the wireless network **619,** with the mobile device user's corresponding data items stored or associated with a host computer system. Further applications may also be loaded onto the mobile device **600** through the network **619,** an auxiliary I/O subsystem **628,** serial port **630,** short-range communications subsystem **640** or any other suitable subsystem **642,** and installed by a user in the RAM **626** or a non-volatile store (not shown) for execution by the microprocessor **638.** Such flexibility in application installation increases the functionality of the device and may provide enhanced on-device functions, communication-related functions, or both.

In a data communication mode, a received signal such as a text message or web page download will be processed by the communication subsystem **611** and input to the microprocessor **638,** which may further process the received signal for output to the display **622,** or alternatively to an auxiliary I/O device **628.** A user of mobile device **600** may also compose data items such as email messages for example, using the keyboard **632,** which is in one embodiment a complete alphanumeric keyboard or telephone-type keypad, in conjunction with the display **622** and possibly an auxiliary I/O device **628.** Such composed items may then be transmitted over a communication network through the communication subsystem **611.**

For voice communications, overall operation of mobile device **600** is similar, except that received signals may be output to a speaker **634** and signals for transmission would be generated by a microphone **636.** Alternative voice or audio I/O subsystems, such as a voice message recording subsystem, may also be implemented on mobile device **600.** Although voice or audio signal output is generally accomplished through the speaker **634,** display **622** may also be used to provide an indication of the identity of a calling party, the duration of a voice call, or other voice call related information for example.

Serial port **630** in **Figure 6** would may be implemented, for example, in a personal digital assistant (PDA)-type mobile device for which synchronization with a user's desktop computer (not shown) may be desirable. Such a port **630** would enable a user to set preferences through an external device or software application and would extend the capabilities of mobile device **600** by providing for information or software downloads to mobile device **600** other than through a wireless communication network.

Alternatively, serial port **630** could be used for other communications, and could include as a universal serial bus (USB) port. An interface is associated with serial port **630.**

Other communications subsystems **640,** such as a short-range communications subsystem, is a further optional component which may provide for communication between mobile device **600** and different systems or devices, which need not necessarily be similar devices. For example, the subsystem **640** may include an infrared device and associated circuits and components or a Bluetooth™ communication module to provide for communication with similarly enabled systems and devices. Subsystem **640** could also include WiFi or WiMAX communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method at a content provider server to provide enclosures, the method comprising:
formatting a content feed to include one or more enclosures referencing alternative formats of a content item, wherein at least one of said enclosures includes codec information added to a type field; and
providing the content feed to a device via a network.

2. The method of claim 1, wherein the type field also has a MIME type.

3. The method of claim 1 or claim 2, wherein the one or more enclosures comprise a primary enclosure and an alternative enclosure.

4. The method of claim 3, wherein the primary enclosure is included in the content feed before the alternative enclosure.

5. The method of claim 3, wherein the primary enclosure is designated by an explicit indication.

6. The method of any one of claims 3 to 5, wherein the alternative enclosure is formatted using known parameters in ATOM Syndication Format, and optionally wherein the alternative enclosure is formatted in link elements including a "rel" attribute set to "enclosure" and wherein the alternative enclosures are used in a single parent entry element.

7. A content provider server configured to provide enclosures, the content provider server adapted to perform the method of any one of claim 1 to 6.

8. A method in a device that receives a content feed, the method comprising:
receiving a content feed with multiple enclosures, the multiple enclosures including at least a primary enclosure and an alternative enclosure, wherein the primary enclosure references a primary format for a content item and the alternative enclosure references an alternate format for the content item;
upon determining that a player does not support the primary format, checking whether the player supports the alternative format; and
if the player supports the alternative format, downloading the content item using a reference included in the alternative enclosure.

9. The method of claim 8, wherein the primary enclosure is selected based on the order in which the multiple enclosures are provided in the content feed.

10. The method of claim 8, wherein the primary enclosure is designated by an explicit indication.

11. The method of any one of claims 8 to 10, wherein the multiple enclosures are:
in a single parent element in the content feed, or
are provided in different parent elements in the content feed.

12. The method of any one of claims 8 to 11, wherein the content feed is:
an RSS feed and the multiple enclosures are formatted as "enclosure" elements, or
an ATOM feed and the multiple enclosures are formatted as "link" elements.

13. The method of claim 12, wherein the content feed is an ATOM feed and the multiple enclosures are formatted as "link" elements and wherein the link elements have a "rel" attribute set to one of "enclosure" and "alternative enclosure".

14. A device configured to receive a content feed, the device adapted to perform the method of any one of claims 9 to 13.

15. The device of claim 14, further comprising: a feed parser operable as an RSS or ATOM reader, wherein the feed parser is configured to provide the content item to the player in one of the alternative formats.
